# EUROPÄISCHE PATENTSCHRIFT

(11) **EP 4 253 701 B1**
(45) Veröffentlichungstag und Bekanntmachung des Hinweises auf die Patenterteilung: **11.09.2024**
(21) Anmeldenummer: 23160884.5
(22) Anmeldetag: 09.03.2023
(51) Int. Cl.: E05B 67/00, E05B 71/00, B62H 5/00

(54) **KETTENSCHLOSS**
CHAIN LOCK
CADENAS À CHAÎNE

(30) Priorität: 25.03.2022 DE 102022107142
(43) Veröffentlichungstag der Anmeldung: 04.10.2023
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 0 793 036
- FR-A1- 2 962 753
- US-A- 1 069 646
- US-A- 4 494 391
- US-A- 4 712 639
- US-A- 6 044 669
- US-B1- 9 677 835

## Beschreibung

Die Erfindung betrifft ein Kettenschloss, insbesondere für ein Zweirad, das einen Schlosskörper sowie ein Riegelelement in Form einer Kette umfasst. Ein Kettenschloss nach dem Oberbegriff des Anspruchs 1 ist z. B. aus FR 2 962 753 A1 bekannt.

Zur Sicherung von Zweirädern oder anderen beweglichen Objekten gegen Diebstahl ist es bekannt, das jeweilige Objekt mittels eines Schlosses an einem unbeweglichen Objekt anzuschließen. Das Schloss weist dabei in der Regel ein länglichen Riegelelement auf, das idealerweise durch eine Öffnung des zu sichernden Objekts sowie durch eine Öffnung des unbeweglichen Objekts oder um das unbewegliche Objekt herum geführt und anschließend so an dem Schlosskörper des Schlosses aufgenommen und verriegelt wird, dass sich eine ringförmig geschlossene Struktur ergibt, die sich anschließend nur mittels eines zugehörigen Schließgeheimnisses, z.B. eines Schlüssels oder eines Codes, regulär wieder entriegeln und öffnen lässt.

Bei diesem Riegelelement kann es sich beispielsweise um einen typischerweise U-förmigen Schließbügel eines Bügelschlosses handeln. Ein solcher Schließbügel ist starr ausgebildet. Aus diesem Grund kann er nur eine sehr beschränkte Länge aufweisen, um für ein einfaches Mitführen nicht zu sperrig zu sein. Das hat zur Folge, dass das zu sichernde bewegliche Objekt sehr nah an dem unbeweglichen Objekt, an dem es gesichert werden soll, positioniert werden muss, um mittels eines Bügelschlosses an diesem gesichert werden zu können.

Eine flexiblere Positionierung des zu sichernden Objekts kann durch ein Schloss mit einem längeren Riegelelement erreicht werden, das dann jedoch vorzugsweise nicht starr oder zumindest nicht durchgehend starr ausgebildet ist, sondern sich zusammenlegen lässt, um in kompakter Form transportiert werden zu können. Ein solches Riegelelement kann beispielsweise durch ein Seil, ein Kabel oder eine Kette gebildet werden.

Dabei ist neben einer flexiblen Anwendbarkeit natürlich auch wichtig, dass das Riegelelement möglichst sicher gegen ein Auftrennen oder Aufbrechen ausgebildet ist. Zwar können Kabelschlösser, insbesondere Spiralkabelschlösser, besonders lange Riegelelemente aufweisen, die z.B. aus Drahtseilen gebildet sein können, die aber oftmals kein besonders hohes Sicherheitslevel bieten. Im Vergleich dazu kann die Verwendung einer Gliederkette aus ineinandergreifenden runden oder ovalen Kettengliedern als Riegelelement eine höhere Sicherheit bieten, da die Gliederkette als Ganzes zwar flexibel ist, die einzelnen Kettenglieder aber starr und somit aus besonders hartem Material, z.B. aus gehärtetem Stahl, ausgebildet sein können. Nachteilig an einer Gliederkette als Riegelelement kann aber das vergleichsweise hohe Gewicht sein.

Bei der Sicherung schwerer Motorräder mag das Gewicht eine eher untergeordnete Rolle spielen. Vor allem aber bei Fahrrädern, insbesondere z.B. hochwertigen leichtgebauten Rennrädern, ist neben einer hohen Aufbruchsicherheit auch ein geringes Gewicht wichtig. Insbesondere in diesem Zusammenhang sind Gelenkstabschlösser besonders vorteilhaft, deren Riegelelement durch starre flachlängliche Glieder gebildet wird, die gelenkig miteinander gekoppelt sind und derart parallelversetzt zueinander angeordnet sind, dass sie nach Art eines Zollstocks zu einem kompakten Paket zusammengelegt werden können. Diese starren Gelenkstäbe ebenso wie die Gelenkverbindungen zwischen den Gelenkstäben können dabei eine hohe Aufbruchsicherheit bieten, während das Gewicht vergleichsweise gering bleibt. Außerdem kann ein Gelenkstabschloss zwar eine, insbesondere im Vergleich zu einem Bügelschloss, große Länge aufweisen, aber dennoch besonders kompakt zusammenlegbar und somit gut transportierbar sein.

Um einfach und mit wenigen Handgriffen wie ein Zollstock zusammengelegt werden zu können, darf jedoch die Länge der einzelnen Gelenkstäbe nicht zu kurz und die Anzahl der Gelenkstäbe nicht zu hoch sein. Das hat zur Folge, dass die Gelenkstabanordnung nur einen polygonalen Verlauf aus wenigen geraden Abschnitten aufweisen kann, aber nicht um enge Kurven geführt werden kann. Insbesondere in beengten Umgebungen, z.B. wenn mehrere Fahrräder an einem einzelnen Laternenmast angeschlossen werden, ist es jedoch vorteilhaft, wenn das Riegelelement des jeweiligen Schlosses auch eng gebogene Verläufe aufweisen kann, um besonders flexibel einsetzbar zu sein.

Darüber hinaus haben eng gebogene Verläufe den Vorteil, dass sich dadurch Freiräume zwischen dem Riegelelement und dem zu sichernden beweglichen Objekt bzw. dem unbeweglichen Objekt, an dem das bewegliche Objekt gesichert wird, vermeiden lassen. Denn solche Freiräume können bei einem Aufbruchsversuch dazu genutzt werden, ein längliches Werkzeug zwischen das Riegelelement und das jeweilige Objekt einzuschieben, um das Werkzeug anschließend als Hebel zu verwenden und das Riegelelement auf diese Weise aufzusprengen. Nachteilige Freiräume können sich jedoch nicht nur aufgrund der Länge einzelner starrer Glieder des Riegelelements ergeben, sondern auch daraus, dass sich die Gesamtlänge der bei geschlossenem Schloss ringförmigen Struktur aus Riegelelement und Schlosskörper üblicherweise nicht situationsabhängig einfach einstellen lässt. Es ist daher in der Regel nicht möglich, das zu sichernde bewegliche Objekt an einem unbeweglichen Objekt so mittels des jeweiligen Schlosses zu sichern, dass die Riegelelement eng an den beiden Objekten anliegt.

Es ist eine Aufgabe der Erfindung, ein Kettenschloss, insbesondere ein Zweiradkettenschloss, bereitzustellen, dass besonders flexibel verwendbar ist und sich besonders aufbruchssicher verwenden lässt.

Die Aufgabe wird gelöst durch ein Kettenschloss mit den Merkmalen des Anspruchs 1.

Vorteilhafte Ausführungsformen der Erfindung ergeben sich aus den Unteransprüchen, der vorliegenden Beschreibung sowie den Figuren.

Das erfindungsgemäße Kettenschloss umfasst einen Schlosskörper sowie als Riegelelement eine Kette.

Erfindungsgemäß umfasst die Kette dabei eine serielle Anordnung aufeinanderfolgender Glieder, die untereinander über eine jeweilige Gelenkverbindung miteinander gekoppelt und um eine zu einer Normalrichtung parallele Gelenkachse der jeweiligen Gelenkverbindung relativ zueinander schwenkbar sind, d.h. dass die Glieder eines jeden Paares zweier unmittelbar aufeinanderfolgender Glieder der Anordnung über eine jeweilige Gelenkverbindung miteinander gekoppelt und um eine zu einer Normalrichtung parallele Gelenkachse der jeweiligen Gelenkverbindung relativ zueinander schwenkbar sind.

Die serielle Anordnung umfasst also eine Vielzahl von Gliedern, die in einer bestimmten Abfolge angeordnet sind. Das entlang dieser Abfolge erste und letzte Glied der Anordnung stellen Endglieder der Anordnung dar. Die Anordnung kann sich insbesondere von einem ersten Endglied bis zu einem zweiten Endglied erstrecken. Jedes Glied der Anordnung mit Ausnahme der beiden Endglieder ist jeweils mit dem ihm entlang der Abfolge vorangehenden Glied und mit dem ihm entlang der Abfolge nachfolgenden Glied über eine jeweilige Gelenkverbindung gekoppelt. Das erste Endglied, dem entlang der Abfolge kein Glied vorangeht, kann dabei lediglich mit dem ihm entlang der Abfolge nachfolgenden Glied der Anordnung über eine Gelenkverbindung gekoppelt sein, und das zweite Endglied, dem entlang der Abfolge kein Glied nachfolgt, kann dabei lediglich mit dem ihm entlang der Abfolge vorangehenden Glied der Anordnung über eine Gelenkverbindung gekoppelt sein. Grundsätzlich können sich aber an einem oder an beiden Enden der Anordnung noch weitere Elemente der Kette, insbesondere auch weitere Glieder, anschließen, die mit dem jeweiligen Ende gelenkig oder auf sonstige Weise gekoppelt sein können. Die Anordnung umfasst beispielsweise zumindest vier Glieder, vorzugsweise zumindest zehn, insbesondere zumindest 16 Glieder.

Erfindungsgemäß ist ferner vorgesehen, dass der Schlosskörper, insbesondere der genannte Kopplungsabschnitt des Schlosskörpers, dazu ausgebildet ist, für das Aufnehmen einer der Gelenkverbindungen in die Verriegelungsaufnahme zwischen die zwei Gliederplatten zumindest eines der beiden Glieder, welche über die Gelenkverbindung miteinander gekoppelt sind, einzugreifen. insbesondere kann es dazu erforderlich sein, dass der Kopplungsabschnitt des Schlosskörpers derart schmal ausgebildet ist, dass er zwischen die zwei Gliederplatten passt. Auf diese Weise kann der Kopplungsabschnitt zwischen die zwei Gliederplatten eingreifen, um dann vorzugsweise die jeweilige Gelenkverbindung zumindest über einen gewissen Winkelbereich, der vorzugsweise mindestens 180° umfasst, zu umgreifen, wodurch diese in die Verriegelungsaufnahme aufgenommen wird.

Alle Gelenkverbindungen, die jeweils zwei aufeinanderfolgende Glieder der Anordnung koppeln, weisen jeweils eine Gelenkachse auf, um welche die durch die jeweilige Gelenkverbindung gekoppelten Glieder relativ zueinander schwenkbar sind. Dabei sind alle diese Gelenkachsen parallel zu einer Normalrichtung und somit auch zueinander parallel ausgerichtet. Die Bezeichnung der gemeinsamen Ausrichtung der Gelenkachsen als Normalrichtung dient dabei lediglich der begrifflichen Unterscheidung von anderen Richtungen und soll weder eine Einschränkung auf eine bestimmte Raumrichtung noch eine besondere Eigenschaft der Richtung als "normal" implizieren.

Insbesondere sind die Gelenkverbindungen jeweils derart ausgebildet, dass die beiden durch die jeweilige Gelenkverbindung gekoppelten Glieder relativ zueinander ausschließlich um die genannte Gelenkachse der Gelenkverbindung schwenkbar sind und keine anderweitige relative Beweglichkeit aufweisen. Mit anderen Worten weisen die Gelenkverbindungen - von möglichem und grundsätzlich nicht völlig vermeidbarem Spiel, z.B. Versatz entlang der Gelenkachse und kleineren Kippbewegungen senkrecht zur Gelenkachse, abgesehen - jeweils nur einen Freiheitsgrad, nämlich die Schwenkbarkeit um die Gelenkachse, auf. Da somit alle Glieder um zueinander parallele Gelenkachsen schwenkbar sind, kann die Beweglichkeit der Glieder und somit der gesamten genannten Anordnung insgesamt auf Bewegungen innerhalb eines Raumbereichs beschränkt sein, der durch zwei zu der Normalrichtung senkrechte Ebenen begrenzt wird.

Die Glieder der Anordnung können sich jeweils entlang einer Längserstreckung von einem ersten Ende zu einem zweiten Ende des jeweiligen Gliedes erstrecken. Insbesondere kann dabei an dem ersten Ende eines jeweiligen Gliedes die Gelenkverbindung zur Kopplung mit dem jeweiligen vorangehenden Glied, sofern ein solches vorhanden ist, und an dem zweiten Ende eines jeweiligen Gliedes die Gelenkverbindung zur Kopplung mit dem jeweiligen nachfolgenden Glied, sofern ein solches vorhanden ist, vorgesehen sein. Die Richtung der Längserstreckung des jeweiligen Gliedes kann dann durch eine Gerade definiert sein, welche die beiden Gelenkverbindungen insbesondere senkrecht zur Normalrichtung verbindet. Die Längserstreckung eines jeweiligen Gliedes kann beispielsweise einige wenige Zentimeter betragen, z.B. im Bereich zwischen 2 cm und 10 cm liegen, vorzugsweise im Bereich zwischen 3 cm und 8 cm liegen, insbesondere im Bereich zwischen 4 cm und 6 cm liegen.

Die Glieder der Anordnung können grundsätzlich zueinander baugleich sein oder auch voneinander verschieden ausgebildet sein. Insbesondere ist es auch möglich, dass sich alle Glieder hinsichtlich ihrer Ausbildung, etwa hinsichtlich ihrer jeweiligen Längserstreckung und/oder ihrer jeweiligen Ausdehnung entlang der Normalrichtung, untereinander unterscheiden. Vorzugsweise sind die Gelenkachsen der Gelenkverbindungen jedoch zumindest regelmäßig voneinander beabstandet. Gemäß einer vorteilhaften Ausführungsform weisen alle Paare zweier jeweiliger entlang der seriellen Anordnung aufeinanderfolgender Gelenkverbindungen denselben Abstand zwischen ihren Gelenkachsen auf. Insbesondere können dabei alle Glieder der Anordnung dieselbe Längserstreckung aufweisen. Je nach Ausführungsform kann der genannte Abstand aber auch variieren.

Die genannte serielle Anordnung kann erste Glieder und zweite Glieder umfassen, die entlang der Abfolge der Glieder der Anordnung abwechselnd aufeinanderfolgen. Die Gelenkverbindungen koppeln also jeweils ein erstes Glied und ein zweites Glied miteinander, nämlich entweder ein erstes Glied mit einem ihm (entlang der Abfolge der Glieder der Anordnung) nachfolgenden zweiten Glied oder ein zweites Glied mit einem ihm (entlang der Abfolge der Glieder der Anordnung) nachfolgenden ersten Glied. Die Bezeichnung der Glieder als erste Glieder und zweite Glieder dient dabei primär der begrifflichen Unterscheidung der Glieder anhand ihrer jeweiligen Position innerhalb der seriellen Anordnung. Insbesondere können die Glieder an einer Position mit ungerader Ordnungszahl (1., 3., usw.) die zweiten Glieder sein, während die Glieder an einer Position mit gerader Ordnungszahl (2., 4., usw.) die ersten Glieder sind. Insofern handelt es sich bei dem genannten ersten Endglied um eines der zweiten Glieder der Anordnung. Abhängig von der Gesamtzahl an Gliedern der Anordnung kann es sich bei dem zweiten Endglied der Anordnung um eines der ersten Glieder oder um eines der zweiten Glieder der Anordnung handeln. Wenn im Folgenden von einem ersten Glied der Anordnung oder von einem zweiten Glied der Anordnung die Rede ist, dient dies jeweils dazu, sich auf ein oder mehrere Glieder an entsprechender Position innerhalb der Anordnung zu beziehen.

Die ersten Glieder müssen sich dabei nicht zwangsläufig von den zweiten Gliedern unterscheiden. Außerdem müssen weder die ersten Glieder noch die zweiten Glieder jeweils zwangsläufig untereinander gleichartig ausgebildet sein. Vorzugsweise jedoch sind die ersten Glieder und/oder die zweiten Glieder jeweils untereinander im Wesentlichen gleichartig, insbesondere baugleich (gegebenenfalls mit Ausnahme des ersten und/oder des zweiten Endgliedes der Anordnung), ausgebildet. Außerdem kann es zweckmäßig sein, dass sich die ersten Glieder von den zweiten Gliedern unterscheiden.

Die genannten Glieder der Anordnung können grundsätzlich ihrerseits weiter untergliedert sein, wobei die Unterglieder relativ zueinander beweglich, insbesondere schwenkbar, sein können. Vorzugsweise jedoch sind alle Glieder der Anordnung jeweils starr ausgebildet. Als Material können die Glieder der Anordnung insbesondere ein gehärtetes Metall umfassen.

Da die Kette die genannte serielle Anordnung untereinander schwenkbar gekoppelter Glieder umfasst, ist die Kette insofern zumindest teilweise, vorzugsweise zumindest im Wesentlichen vollständig, als Gelenkkette ausgebildet. Eine solche Gelenkkette aus durch Gelenkverbindungen verbundenen Gliedern ist von einer Gliederkette aus ringförmig ineinandergreifenden Gliedern zu unterscheiden, welche jeweils relativ zu dem vorangehenden oder nachfolgenden Glied weitgehend frei in alle drei Raumrichtungen verschwenkt und in beschränktem Umfang auch versetzt werden können.

Dabei ist es bevorzugt, wenn die Glieder der genannten Anordnung entlang der Normalrichtung zumindest teilweise dieselbe Lage einnehmen. Beispielsweise kann vorgesehen sein, dass an zumindest einigen, insbesondere an jeder, der Gelenkverbindungen, die ein jeweiliges Glied mit einem ihm vorangehenden Glied koppeln, das jeweilige Glied und das ihm vorangehende Glied entlang der Normalrichtung zumindest teilweise dieselbe Lage einnehmen.

Zwei Glieder, die entlang der Normalrichtung zumindest teilweise dieselbe Lage einnehmen, müssen sich nicht zwangsläufig entlang der Normalrichtung über denselben Bereich erstrecken, sondern können bezüglich der Normalrichtung unterschiedliche Ausdehnung aufweisen und/oder entlang der Normalrichtung relativ zueinander versetzt sein, jedoch nur so weit, dass sie bezüglich der Normalrichtung noch überlappen. Darin unterscheidet sich eine solche Ausführungsform insbesondere von Gelenkstabschlössern, deren Glieder jeweils durch einen einzelnen Gelenkstab gebildet werden und bezüglich der Richtung, zu welcher die Gelenkachsen der die Gelenkstäbe koppelnden Gelenkverbindungen parallel ausgerichtet sind, ähnlich den Gliedern eines Zollstocks derart versetzt zueinander angeordnet sind, dass sie entlang dieser Richtung nicht überlappen, sondern unterschiedliche Lagen aufweisen und dass folglich zwei aufeinanderfolgende Gelenkstäbe jeweils frei aneinander vorbei geschwenkt werden können.

Da zwei entlang der Normalrichtung zumindest teilweise dieselbe Lage einnehmende Glieder bezüglich der Normalrichtung überlappen, gibt es für zwei solche Glieder somit stets eine zu der Normalrichtung senkrechte Ebene, welche beide Glieder schneidet. Gemäß einer bevorzugten Ausführungsform kann insbesondere vorgesehen sein, dass es eine zu der Normalrichtung senkrechte Ebene gibt, die sämtliche Glieder der Anordnung schneidet. Die Ausdehnung eines jeweiligen Gliedes entlang der Normalrichtung kann dabei durch den Abstand, insbesondere Außenabstand, zweier Gliederplatten des jeweiligen Gliedes (falls das jeweilige Glied mehr Gliederplatten aufweist: der beiden äußersten Gliederplatten des jeweiligen Gliedes) definiert sein, so dass eine zu der Normalrichtung senkrechte Ebene das jeweilige Glied dann schneidet, wenn die Ebene zwischen den beiden Gliederplatten, insbesondere zwischen deren jeweiligen Außenseiten, verläuft.

Erfindungsgemäß weist der Schlosskörper eine Verriegelungsaufnahme auf, die dazu ausgebildet ist, eine der Gelenkverbindungen aufzunehmen, und umfasst einen Verriegelungsmechanismus, mittels dessen die in der Verriegelungsaufnahme aufgenommene Gelenkverbindung gegen ein Verlassen der Verriegelungsaufnahme sicherbar ist. Mit der in der Verriegelungsaufnahme aufgenommenen Gelenkverbindung ist dabei die gegebenenfalls darin aufgenommene Gelenkverbindung gemeint. Mit anderen Worten ist der Verriegelungsmechanismus dazu ausgebildet, sofern denn eine der Gelenkverbindungen in der Verriegelungsaufnahme aufgenommen ist, diese gegen ein Verlassen der Verriegelungsaufnahme zu sichern. Dadurch, dass eine der Gelenkverbindungen der genannten Anordnung aufeinanderfolgender und gelenkig miteinander gekoppelter Glieder der Kette in der Verriegelungsaufnahme aufgenommen und gesichert werden kann, ist die Kette an dem Schlosskörper verriegelbar.

Dass sich eine der Gelenkverbindungen der Anordnung aufeinanderfolgender Glieder in die Verriegelungsaufnahme des Schlosskörpers aufnehmen und darin sichern lässt, ist nicht auf eine bestimmte der Gelenkverbindungen beschränkt zu verstehen. Vielmehr kann eine beliebige von zumindest einigen, vorzugsweise allen, genannten Gelenkverbindungen, über die zwei Glieder der Anordnung miteinander gekoppelt und relativ zueinander schwenkbar sind, in der Verriegelungsaufnahme aufgenommen und mittels des Verriegelungsmechanismus darin gesichert werden. Somit kann durch Wahl der Gelenkverbindung, die an dem Schlosskörper auf diese Weise verriegelt wird, die Länge der ringförmig geschlossenen Struktur, die bei geschlossenem Kettenschloss gebildet wird, verstellbar sein. Zweckmäßigerweise wird die Gelenkverbindung dabei so gewählt, dass sich die kleinstmögliche Länge ergibt, mit der das zu sichernde Objekte an einem anderen Objekt gesichert werden kann. Dadurch werden mögliche Freiräume zwischen dem Kettenschloss und den Objekten minimiert, was zu einer verbesserten Aufbruchssicherheit führt.

Im Hinblick auf die beschriebene Verriegelbarkeit an dem Schlosskörper ist den Gelenkverbindungen vorzugsweise auch ein Abschnitt eines der genannten Endglieder der Anordnung gleichgestellt, der zu der Gelenkverbindung, die dieses Endglied mit dem nachfolgenden bzw. vorangehenden Glied der Anordnung koppelt, entgegengesetzt angeordnet ist und das Endglied zwar mit keinem weiteren Glied koppelt, aber strukturell zumindest im Wesentlichen identisch zu den zwei jeweilige Glieder koppelnden Gelenkverbindungen ausgebildet ist. Denn da dieser Abschnitt wie eine dieser Gelenkverbindungen ausgebildet ist, lässt er sich gleichermaßen in die Verriegelungsaufnahme aufnehmen und mittels des Verriegelungsmechanismus darin sichern. Somit kann die Kette wahlweise auch mit einem der Enden der Anordnung, das insbesondere einem der Enden der Kette entsprechend kann, an dem Schlosskörper verriegelt werden. Daher ist es bevorzugt, wenn ein Abschnitt eines entlang der Abfolge der Glieder der genannten Anordnung ersten oder letzten Gliedes derart, insbesondere strukturell zumindest im Wesentlichen identisch zu den Gelenkverbindungen, ausgebildet ist, dass er (in entsprechender Weise wie eine jeweilige der Gelenkverbindungen) in die Verriegelungsaufnahme aufnehmbar und mittels des Verriegelungsmechanismus gegen ein Verlassen der Verriegelungsaufnahme sicherbar ist. Insbesondere kann durch Verriegeln dieses Abschnitts an dem Schosskörper eine maximale Länge der ringförmig geschlossenen Struktur, die bei geschlossenem Kettenschloss gebildet wird, einstellbar sein.

Grundsätzlich können der Schlosskörper und die Kette (ähnlich wie bei einem Bügelschloss) separat voneinander vorgesehen sein. In diesem Fall kann es vorteilhaft sein, wenn nicht nur eine der Gelenkverbindungen der Kette in der genannten Verriegelungsaufnahme des Schlosskörpers aufgenommen und verriegelt werden kann, sondern auch ein weiterer Abschnitt der Kette, z.B. eine weitere Gelenkverbindung oder ein Ende der Kette, an dem Schlosskörper verriegelbar ist, damit der Schlosskörper und die Kette eine ringförmig geschlossene Struktur ausbilden können. Dazu kann die Verriegelungsaufnahme dazu ausgebildet sein, zwei der Gelenkverbindungen aufzunehmen, die gemeinsam mittels des Verriegelungsmechanismus in der Verriegelungsaufnahme sicherbar sind. Alternativ oder zusätzlich dazu kann der Schlosskörpern zum Sichern des genannten weiteren Abschnitts der Kette auch eine weitere Verriegelungsaufnahme aufweisen, in welcher der weitere Abschnitt aufgenommenen werden kann. Der weitere Abschnitt kann dann mittels eines weiteren Verriegelungsmechanismus oder auch mittels des genannten Verriegelungsmechanismus gegen ein Verlassen der weiteren Verriegelungsaufnahme sicherbar sein.

Aber auch, wenn der Schlosskörper und die Kette separat voneinander vorgesehen sind, braucht nicht unbedingt ein weiterer Abschnitt der Kette an dem Schlosskörper verriegelbar zu sein. Denn die Kette kann, insbesondere an einem ihrer Enden, eine Öse aufweisen, durch die hindurch zur Bildung einer Schlaufe ein Teil der Kette geführt werden kann. Diese Schlaufe kann als ringförmig geschlossene Struktur ein jeweiliges Objekt mit einem anderen verbinden. Wenn anschließend eine Gelenkverbindung aus diesem Teil der Kette in die Verriegelungsaufnahme des Schlosskörpers aufgenommen und darin gesichert wird, kann durch diese einzelne Verriegelung der Kette an dem Schlosskörper die ausgebildete Schlaufe gegen ein Öffnen und somit das jeweilige Objekt gegen ein Lösen von einem anderen Objekt, an dem es angeschlossen ist, gesichert sein.

Alternativ dazu, den Schlosskörper und die Kette separat vorzusehen, können der Schlosskörper und die Kette gemäß einer vorteilhaften Ausführungsform dauerhaft fest miteinander verbunden sein. Beispielsweise kann sich der Schlosskörper von einem ersten Ende, an dem der Schlosskörper dauerhaft mit der Kette, zum Beispiel mit einem Ende der Kette, insbesondere mit einem Endglied der Anordnung aufeinanderfolgender Glieder, gekoppelt ist, zu einem zweiten Ende, an dem die Verriegelungsaufnahme ausgebildet ist, erstrecken. Vorzugsweise ist der Schlosskörper dabei an seinem ersten Ende gelenkig mit der Kette gekoppelt.

Insofern ist eine Ausführungsform vorteilhaft, bei der sich der Schlosskörper von einem ersten Ende zu einem zweiten Ende erstreckt, wobei der Schlosskörper an dem ersten Ende über eine Gelenkverbindung mit der Kette, insbesondere mit einem der Glieder der genannten Anordnung, gekoppelt und um eine zu der Normalrichtung parallele Gelenkachse dieser Gelenkverbindung relativ zu der Kette, insbesondere relativ zu diesem Glied der Anordnung, schwenkbar ist, und wobei an dem zweiten Ende die Verriegelungsaufnahme ausgebildet ist.

Die Erstreckung des Schlosskörpers von seinem ersten Ende zu seinem zweiten Ende kann dabei insbesondere senkrecht zur Normalrichtung ausgerichtet sein. Zudem kann die Länge dieser Erstreckung der Länge eines jeweiligen Gliedes der Anordnung (die für alle Glieder gleich sein kann) zumindest im Wesentlichen entsprechen. Beispielsweise kann die Länge des Schlosskörpers im Bereich von 90% bis 130% der Länge eines jeweiligen Gliedes der Anordnung liegen. Auch ansonsten können die Ausmaße des Schlosskörpers den Ausmaßen eines jeweiligen Gliedes der Anordnung zumindest im Wesentlichen entsprechen. Beispielsweise kann vorgesehen sein, dass die Ausmaße des Schlosskörpers höchstens 130% der entsprechenden Ausmaße eines jeweiligen Gliedes der Anordnung in allen drei Raumrichtungen (insbesondere senkrecht bzw. parallel zur Normalrichtung) betragen. Auf diese Weise kann der Schlosskörper als eine Art weiteres Glied der Kette erscheinen. Die gelenkige Verbindung der Kette mit dem Schlosskörper trägt zudem noch weiter dazu bei, dass sich das Kettenschloss besonders flexibel anordnen lässt.

Gemäß einer weiteren vorteilhaften Ausführungsform ist die Verriegelungsaufnahme dazu ausgebildet, dass die Glieder, die von der in der Verriegelungsaufnahme (gegebenenfalls) aufgenommenen und gesicherten Gelenkverbindung miteinander gekoppelt werden, relativ zu dem Schlosskörper um die Gelenkachse der Gelenkverbindung schwenkbar sind. Mit anderen Worten ist die Verriegelungsaufnahme dazu ausgebildet, dass dann, wenn eine jeweilige Gelenkverbindung in der Verriegelungsaufnahme aufgenommen und mittels des Verriegelungsmechanismus gegen ein Verlassen der Verriegelungsaufnahme gesichert ist, die Glieder, die von dieser Gelenkverbindung miteinander gekoppelt werden, relativ zu dem Schlosskörper um die Gelenkachse der Gelenkverbindung schwenkbar sind. In entsprechender Weise kann dann auch der genannte strukturell zumindest im Wesentlichen identisch zu einer Gelenkverbindung ausgebildete Abschnitt eines Endgliedes der Anordnung, wenn er in der Verriegelungsaufnahme aufgenommen und gesichert ist, um eine den Gelenkachsen der Gelenkverbindungen entsprechende Gelenkachse des Abschnitts relativ zu dem Schlosskörper schwenkbar sein, wobei diese Gelenkachse vorzugsweise wie die übrigen Gelenkachsen parallel zur Normalrichtung ausgerichtet ist.

Vorzugweise stellt die genannte Schwenkbarkeit zumindest dann, wenn die jeweilige Gelenkverbindung (bzw. der genannte Abschnitt des Endgliedes der Anordnung) in der Verriegelungsaufnahme nicht nur aufgenommen, sondern auch mittels des Verriegelungsmechanismus gesichert ist, den einzigen Freiheitsgrad dieser Kopplung der Kette mit dem Schlosskörper dar.

Gemäß einer weiteren vorteilhaften Ausführungsform weist der Schlosskörper einen Kopplungsabschnitt auf, an dem die Verriegelungsaufnahme ausgebildet ist und der die in der Verrieglungsaufnahme aufgenommene Gelenkverbindung in Umfangsrichtung um deren Gelenkachse über mindestens 180°, vorzugsweise mindestens 225°, insbesondere mindestens 270°, umgreift. Der Kopplungsabschnitt kann insbesondere durch einen Abschnitt eines Gehäuses und/oder einer Tragestruktur des Schlosskörpers gebildet sein. Vorzugsweise ist der Kopplungsabschnitt dabei besonders starr, insbesondere verwindungsfest, ausgebildet. Dazu kann der Kopplungsabschnitt beispielsweise als Material ein gehärtetes Metall umfassen.

Der genannte Winkel bezieht sich auf einen Winkelbereich um die Gelenkachse der (gegebenenfalls) in der Verriegelungsaufnahme aufgenommenen Gelenkverbindung. Dass der Kopplungsabschnitt die Gelenkverbindung über einen bestimmten Winkel umgreift, meint dabei insbesondere, dass gedachte Strahlen, die von der Gelenkachse ausgehen und in einer zur Gelenkachse senkrechten, den Kopplungsabschnitt schneidenden Ebene liegen, auf den Kopplungsabschnitt treffen, wenn sie sich innerhalb eines bestimmten Winkelbereichs um die Gelenkachse herum befinden, der eine Winkelausdehnung aufweist, die dem bestimmten Winkel entspricht, wohingegen sie nicht auf den Kopplungsabschnitt treffen, wenn sie sich in einem übrigen Winkelbereich (d.h. außerhalb des bestimmten Winkelbereichs) befinden. Der übrige Winkelbereich kann dabei einen Durchgang definieren, durch den hindurch eine jeweilige der Gelenkverbindungen in die an dem Kopplungsabschnitt ausgebildete Verriegelungsaufnahme aufgenommen werden kann.

Um die Gelenkverbindung auf die beschriebene Weise umgreifen zu können, kann der Kopplungsabschnitt insbesondere hakenförmig ausgebildet sein. Beispielweise kann der Kopplungsabschnitt dabei eine U-Form aufweisen. In diesem Fall bildet der Freiraum zwischen den Enden der U-Form den genannten Durchgang in die Verriegelungsaufnahme, die zumindest teilweise durch einen, insbesondere am Boden der U-Form befindlichen, Bereich des Innenraums der U-Form gebildet werden kann.

Gemäß einer weiteren vorteilhaften Ausführungsform umfasst der Verriegelungsmechanismus ein Sicherungselement, das zwischen einer Sicherungsstellung, in der es die in der Verriegelungsaufnahme aufgenommene Gelenkverbindung gegen ein Verlassen der Verriegelungsaufnahme sperrt, und einer Freigabestellung, in der es die in der Verriegelungsaufnahme aufgenommene Gelenkverbindung für ein Verlassen der Verriegelungsaufnahme freigibt, beweglich an dem Schlosskörper, vorzugsweise an dem genannten Kopplungsabschnitt oder zumindest im Bereich des genannten Kopplungsabschnitts, gelagert ist. Das Sicherungselement kann insbesondere an einem Gehäuse und/oder einer Tragestruktur des Schlosskörpers gelagert sein.

Bei einer solchen Ausführungsform kann das Verriegeln der Kette an dem Schlosskörper somit dadurch erfolgen, dass, während sich das Sicherungselement in seiner Freigabestellung befindet, eine der Gelenkverbindungen in die Verriegelungsaufnahme aufgenommen wird und anschließend das Sicherungselement in seine Sicherungsstellung verstellt wird, so dass die jeweilige Gelenkverbindung die Verriegelungsaufnahme nicht mehr verlassen kann. Umgekehrt erfolgt das Entriegeln durch Verstellen des Sicherungselements in seine Freigabestellung, woraufhin die Gelenkverbindung aus der Verriegelungsaufnahme entnommen werden kann.

Dabei ist es ferner bevorzugt, dass das Sicherungselement zwischen der Sicherungsstellung und der Freigabestellung um die Gelenkachse der in der Verriegelungsaufnahme aufgenommenen Gelenkverbindung drehbar an dem Schlosskörper gelagert ist. Mit anderen Worten handelt es sich bei der Beweglichkeit des Sicherungselements um eine Drehbeweglichkeit um die Gelenkachse der gegebenenfalls in der Verriegelungsaufnahme aufgenommenen Gelenkverbindung. Vorzugsweise ist das Sicherungselement ausschließlich drehbeweglich. Bei der Freigabestellung und der Sicherungsstellung handelt es sich dann um Drehstellungen, die sich vorzugsweise um einen Winkel von mindestens 90°, insbesondere mindestens 120°, unterscheiden. Durch die Drehbeweglichkeit kann das Sicherungselement beim Verstellen zwischen der Freigabestellung und der Sicherungsstellung vorteilhafterweise besonders wenig Platz beanspruchen.

Wenn das Sicherungselement drehbar an dem Schlosskörper gelagert ist, ist es gemäß einer Weiterbildung einer solchen Ausführungsform ferner vorteilhaft, wenn das Sicherungselement eine Außenverzahnung aufweist, über die es von einer Schließvorrichtung des Schlosskörpers zu einer Drehung zwischen der Sicherungsstellung und der Freigabestellung antreibbar ist. Vorzugsweise erstreckt sich die Außenverzahnung dabei entlang eines Teils einer Kreisbahn. Beispielsweise kann sich die Außenverzahnung über einen Winkelbereich erstrecken, der zumindest 180°, bevorzugt zumindest 225°, insbesondere zumindest 270°, umfasst. Insofern kann das Sicherungselement nach Art eines Zahnrades ausgebildet sein, das jedoch umfänglich nicht geschlossen ist. Die Außenverzahnung ermöglicht dabei eine einfache und zugleich zuverlässig Antriebskopplung mit der genannten Schließvorrichtung über gegenseitigen Zahneingriff.

Die Schließvorrichtung kann insbesondere (zusammen mit dem Sicherungselement sowie gegebenenfalls weiteren Elementen) Teil des genannten Verriegelungsmechanismus des Kettenschlosses sein. Die Schließvorrichtung kann beispielsweise einen Schließzylinder umfassen oder als Schließzylinder ausgebildet sein, der in für sich grundsätzlich bekannter Weise ausgebildet sein kann. Insbesondere kann der Schließzylinder nur mittels eines jeweiligen dem Schließzylinder zugeordneten Schlüssels betätigbar sein. Mit anderen Worten umfasst der zugeordnete Schlüssel ein Schließgeheimnis, das für die Betätigung des Schließzylinders (zumindest für ein Öffnen des Kettenschlosses) erforderlich ist. Der Schließzylinder kann dazu ausgebildet sein, dass bei einer Betätigung des Schließzylinders mittels des Schlüssels ein von dem Schließzylinder umfasster oder mit dem Schließzylinder antriebswirksam gekoppelter Mitnehmer gedreht wird, der mittelbar (zum Beispiel über ein Zahnrad) oder vorzugweise unmittelbar mit dem Sicherungselement antriebswirksam gekoppelt ist. Beispielsweise kann der Mitnehmer eine Außenverzahnung aufweisen, die mit der Außenverzahnung des Sicherungselements in Eingriff ist. Auf diese Weise kann das Sicherungselement durch Betätigung des Schließzylinders zwischen seiner Freigabestellung und seiner Sicherungsstellung verstellt werden.

Gemäß einer weiteren vorteilhaften Ausführungsform umgreift das Sicherungselement die in der Verriegelungsaufnahme (gegebenenfalls) aufgenommene Gelenkverbindung in Umfangsrichtung um deren Gelenkachse über mindestens 180°, vorzugsweise mindestens 225°, insbesondere mindestens 270°. Der genannte Winkel bezieht sich auf einen Winkelbereich um die Gelenkachse der (gegebenenfalls) in der Verriegelungsaufnahme aufgenommenen Gelenkverbindung. Dass das Sicherungselement die Gelenkverbindung über einen bestimmten Winkel umgreift, meint dabei insbesondere, dass gedachte Strahlen, die von der Gelenkachse ausgehen und in einer zur Gelenkachse senkrechten, das Sicherungselement schneidenden Ebene liegen, auf das Sicherungselement treffen, wenn sie sich innerhalb eines bestimmten Winkelbereichs um die Gelenkachse herum befinden, der eine Winkelausdehnung aufweist, die dem bestimmten Winkel entspricht, wohingegen sie nicht auf den Kopplungsabschnitt treffen, wenn sie sich in einem übrigen Winkelbereich (d.h. außerhalb des bestimmten Winkelbereichs) befinden. Der übrige Winkelbereich kann dabei einen Durchgang definieren, durch den hindurch eine jeweilige der Gelenkverbindungen in die an dem Kopplungsabschnitt ausgebildete Verriegelungsaufnahme aufgenommen werden kann, wenn sich das Sicherungselement in seiner Freigabestellung befindet.

Das Sicherungselement kann dabei insbesondere U-förmig ausgebildet sein. Der Freiraum zwischen den Enden der U-Form kann dann den genannten Durchgang in die Verriegelungsaufnahme bilden, die zumindest teilweise durch einen, insbesondere am Boden der U-Form befindlichen, Bereich des Innenraums der U-Form gebildet werden kann.

Gemäß einer weiteren vorteilhaften Ausführungsform umgreift das Sicherungselement in seiner Sicherungsstellung zusammen mit dem Schlosskörper, insbesondere zusammen mit dem genannten Kopplungsabschnitt des Schlosskörpers, die in der Verriegelungsaufnahme aufgenommene Gelenkverbindung im Umfangsrichtung um deren Gelenkachse vollumfänglich. Mit anderen Worten umschließen das Sicherungselement und der Schlosskörper die jeweilige Gelenkverbindung vollumfänglich, so dass alles gedachten Strahlen, die von der Gelenkachse ausgehen und in einer zur Gelenkachse senkrechten, das Sicherungselement und/ oder den Schlosskörper schneidenden Ebene liegen, unabhängig von ihrer Winkelausrichtung zumindest entweder auf das Sicherungselement oder auf den Schlosskörper treffen. Das Sicherungselement und der Schlosskörper, insbesondere dessen Kopplungsabschnitt, bilden dadurch eine ringförmig geschlossene Struktur, die von der jeweiligen in der Verriegelungsaufnahme aufgenommenen Gelenkverbindung durchgriffen wird. Auf diese Weise ist die Gelenkverbindung besonders zuverlässig gegen ein Verlassen der Verriegelungsaufnahme gesichert, da kein Spalt zwischen dem Sicherungselement und dem Schlosskörper verbleibt, der aufgestemmt werden könnte.

Erfindungsgemäß umfasst jedes der Glieder der Anordnung zwei jeweilige Gliederplatten, die entlang der Normalrichtung versetzt zueinander angeordnet sind, wobei sich jede der zwei Gliederplatten von einem ersten Ende des jeweiligen Gliedes, an dem die Gelenkverbindung zur Kopplung mit dem ihm vorangehenden Glied ausgebildet ist, zu einem dazu entgegengesetzten zweiten Ende des jeweiligen Gliedes, an dem die Gelenkverbindung zur Kopplung mit dem ihm nachfolgenden Glied ausgebildet ist, erstreckt. Es versteht sich, dass an dem ersten Ende des jeweiligen Gliedes nur dann eine Gelenkverbindung zur Kopplung mit dem ihm vorangehenden Glied ausgebildet ist, sofern ihm tatsächlich ein Glied vorangeht, was insbesondere für das genannte erste Endglied nicht unbedingt der Fall ist. In entsprechender Weise versteht es sich, dass an dem zweiten Ende des jeweiligen Gliedes nur dann eine Gelenkverbindung zur Kopplung mit dem ihm nachfolgenden Glied ausgebildet ist, sofern ihm tatsächlich ein Glied nachfolgt, was insbesondere für das genannte zweite Endglied nicht unbedingt der Fall ist.

Die Glieder der Anordnung sind dabei nicht darauf beschränkt, genau zwei Gliederplatten aufzuweisen. Neben den genannten zwei Gliederplatten können die Glieder der Anordnung jeweils auch noch weitere, insbesondere gleichartige, Gliederplatten umfassen. Wenn im Folgenden von den zwei Gliederplatten eines jeweiligen Gliedes die Rede ist, bezieht sich dies bei Gliedern, die mehr als zwei Gliederplatten aufweisen, jeweils vorzugsweise auf die zwei entlang der Normalrichtung äußersten Gliederplatten des jeweiligen Gliedes.

Die Gliederplatten eines jeweiligen Gliedes werden auch als Laschen bezeichnet und können jeweils als starre, flache und längliche Platte ausgebildet sein und/ oder untereinander dieselbe Form aufweisen. Vorzugsweise sind die Gliederplatten parallel zueinander, insbesondere jeweils senkrecht zur Normalrichtung, ausgerichtet. Als Material können die Gliederplatten insbesondere ein gehärtetes Metall umfassen.

Die Glieder der Anordnung können jeweils, abgesehen von Elementen, die einer der Gelenkverbindungen zuzuordnen sind, im Wesentlichen aus den genannten Gliederplatten bestehen. Mit anderen Worten können die Glieder, unter Umständen mit Ausnahme des ersten und/oder des zweiten Endgliedes, jeweils ausschließlich die Gliederplatten sowie allenfalls noch Elemente umfassen, die Teil einer jeweiligen Gelenkverbindung sind (zum Beispiel einen oder mehrere Bolzen bzw. Hülsen sowie gegebenenfalls Rollen, wie weiter unten erläutert wird), jedoch vorzugsweise keine sonstigen Elemente. Eine solche Ausbildung trägt zu einem geringen Gewicht der Kette bei.

Die zwei Gliederplatten eines jeweiligen Gliedes weisen bezüglich der Normalrichtung, entlang welcher sie versetzt zueinander angeordnet sind, einen Abstand zueinander auf. Da die Gliederplatten jeweils eine gewisse Dicke aufweisen, kann dabei als Abstand der Außenabstand, der mittlere Abstand oder der Innenabstand betrachtet werden. Vorzugsweise ist der Abstand zwischen den zwei Gliederplatten für alle ersten Glieder der Anordnung gleich und/oder ist der Abstand zwischen den zwei Gliederplatten für alle zweiten Glieder der Anordnung gleich, wobei der Abstand bei den ersten Gliedern anders als bei den zweiten Gliedern sein kann.

Insbesondere können die Glieder der Anordnung abwechselnd einen größeren Abstand und einen kleineren Abstand zwischen ihren zwei jeweiligen Gliederplatten aufweisen. Beispielsweise kann der Abstand der zwei Gliederplatten bei den genannten ersten Gliedern größer sein als bei den genannten zweiten Gliedern. Vorzugsweise ist dabei der Innenabstand der Gliederplatten bei den ersten Gliedern größer als der Außenabstand der Gliederplatten bei den zweiten Gliedern (oder gerade umgekehrt). Auf diese Weise können im Bereich einer zwei Glieder miteinander koppelnden Gelenkverbindung jeweils die Gliederplatten des zweiten Gliedes bezogen auf die Normalrichtung zwischen den Gliederplatten des ersten Gliedes angeordnet sein.

Der Innenabstand der Gliederplatten bei den Gliedern mit dem größeren Abstand kann insbesondere nahezu identisch (mit einer Abweichung von weniger als 1 mm, insbesondere weniger als 0,5 mm) zum Außenabstand der Gliederplatten bei den Gliedern mit dem geringeren Abstand sein, so dass im Bereich einer Gelenkverbindung die Gliederplatten des einen Gliedes jeweils an einer der Gliederplatten des anderen Gliedes flächig anliegen.

Der Abstand zwischen den zwei Gliederplatten ist vorzugsweise über die gesamte Längserstreckung eines jeweiligen Gliedes konstant oder zumindest an den beiden Enden des jeweiligen Gliedes identisch. Der Abstand kann dabei beispielsweise im Bereich zwischen 0,5 cm und 4 cm liegen. Der Abstand zwischen den zwei Gliederplatten eines jeweiligen Gliedes kann sich aber entlang der Längserstreckung des Gliedes auch verändern, zum Beispiel wenn die Gliederplatten bezüglich der Normalrichtung schräg angeordnet sind und/oder gestuft ausgebildet sind.

Die serielle Anordnung abwechselnd aufeinanderfolgender Glieder kann insbesondere als eine Bolzenkette ausgebildet sein, bei der die Gelenkverbindungen im Wesentlichen durch Bolzen gebildet werden, welche die Gliederplatten der durch die jeweilige Gelenkverbindung gekoppelten Glieder an deren jeweiligem Ende durchgreift. Der Bolzen definiert dann die Gelenkachse der jeweiligen Gelenkverbindung. Insbesondere kann die gesamte Kette als eine solche Bolzenkette ausgebildet sein.

Wenn die Glieder der Anordnung jeweils mehr als zwei Gliederplatten umfassen, kann die Anordnung oder die gesamte Kette auch als Flyerkette ausgebildet sein. Wenn die Glieder der Anordnung, wie oben erläutert, als erste Glieder und zweite Glieder unterschieden werden und entweder die ersten oder die zweiten Glieder der Anordnung jeweils zwei Gliederplatten aufweisen, die jeweils anderen Glieder der Anordnung aber einen blockartigen Körper aufweisen, kann die Anordnung oder die gesamte Kette insbesondere auch als Blockkette ausgebildet sein.

Gemäß einer vorteilhaften Ausführungsform umfassen die Gelenkverbindungen jeweils einen Bolzen, der an dem einen von der jeweiligen Gelenkverbindung gekoppelten Glied (beispielsweise an dem von der jeweiligen Gelenkverbindung gekoppelten ersten Glied) ausgebildet ist, sowie eine Hülse, die an dem anderen von der jeweiligen Gelenkverbindung gekoppelten Glied (beispielsweise an dem von der jeweiligen Gelenkverbindung gekoppelten zweiten Glied) ausgebildet ist und von dem Bolzen derart durchgriffen wird, dass sie um den Bolzen schwenkbar ist. Insofern kann die Anordnung, insbesondere die gesamte Kette, als Hülsenkette (auch Buchsenkette genannt) ausgebildet sein.

Die Hülse kann insbesondere eine Zylinderform mit offenen Stirnseiten aufweisen. Der Bolzen kann in die Hülse aufgenommen sein und die Hülse insofern durchgreifen, als er sich dabei durch beide offenen Stirnseiten hindurch erstreckt. Dazu ist es zweckmäßig, dass der Bolzen eine größere axiale Länge als die Hülse aufweist. Sofern die zwei durch die jeweilige Gelenkverbindung gekoppelten Glieder jeweils zwei Gliederplatten aufweisen, kann der Bolzen durch Öffnungen oder Bohrungen, die in den insgesamt vier Gliederplatten an den miteinander gekoppelten Enden der zwei Glieder ausgebildet sind, hindurchgeführt sein und beispielsweise durch Umfangserweiterungen an den Enden seiner axialen Erstreckung darin fixiert sein. Die Hülse kann die Öffnungen oder Bohrungen der im Bereich der jeweiligen Gelenkverbindung inneren zwei der vier Gliederplatten miteinander verbinden und somit zugleich als Abstandshalter für die Gliederplatten fungieren.

Die Gelenkverbindungen können ferner jeweils eine Rolle umfassen, die drehbar um die Hülse herum gelagert ist und vorzugsweise zumindest im Wesentlichen dieselbe axiale Erstreckung wie die Hülse aufweist. Die Anordnung, insbesondere die gesamte Kette, kann insofern als Rollenkette ausgebildet sein.

Die Erfindung wird nachfolgend lediglich beispielhaft durch Bezugnahme auf die Figuren weiter erläutert.
- Fig. 1: zeigt in einer perspektivischen Darstellung eine Ausführungsform eines erfindungsgemäßen Kettenschlosses in einer kompakten Aufbewahrungskonfiguration.
- Fig. 2: zeigt zwei Glieder der Kette des Kettenschlosses.
- Fig. 3: zeigt das Kettenschloss in einem geschlossenen Zustand, in dem ein Endglied des Kettenschlosses an dem Schlosskörper des Kettenschlosses gesichert ist.
- Fig. 4: zeigt einen Ausschnitt des Kettenschlosses in einem weiteren geschlossenen Zustand, in dem eine zwei Glieder des Kettenschlosses koppelnde Gelenkverbindung an dem Schlosskörper des Kettenschlosses gesichert ist.

Um zu vermeiden, dass die Darstellung unübersichtlich wird, sind nicht in allen Figuren jeweils sämtliche dargestellten Elemente mit Bezugszeichen versehen, sondern sind von Elementen, die in mehreren Figuren gezeigt sind bzw. in einer Figur mehrfach gezeigt sind, nur einzelne mit Bezugszeichen gekennzeichnet. Die Bezugszeichen beziehen sich aber jeweils gleichermaßen auch auf die weiteren gleichartigen Elemente.

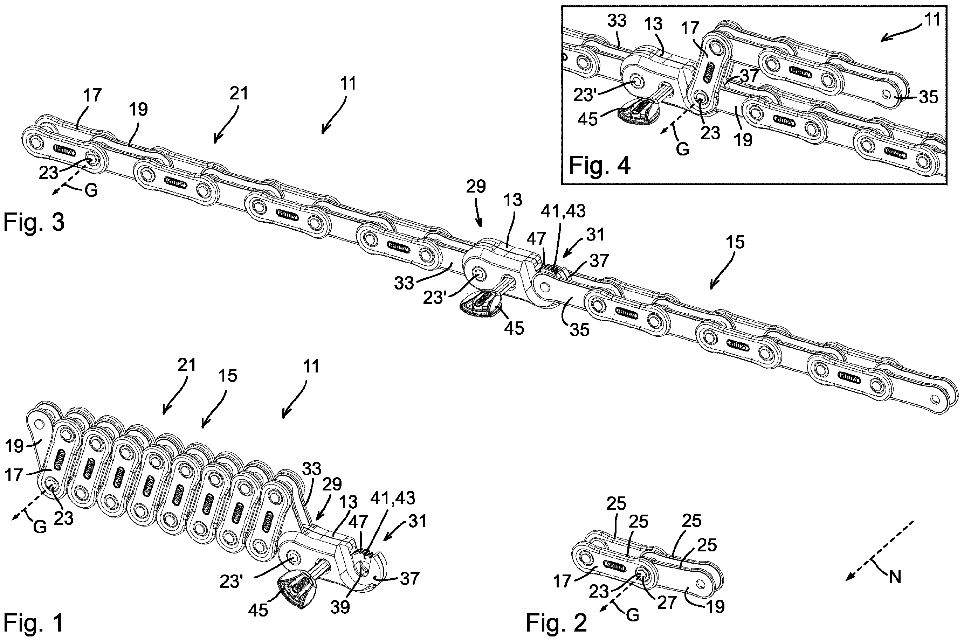

In den Fig. 1 bis 4 ist eine beispielhafte Ausführungsform eines erfindungsgemäßen Kettenschlosses 11 gezeigt, das insbesondere als Kettenschloss für ein Zweirad geeignet ist. Das Kettenschloss 11 umfasst einen Schlosskörper 13 sowie eine Kette 15, die ihrerseits eine Vielzahl abwechselnd aufeinanderfolgender erster und zweiter Glieder 17, 19 umfasst. Die ersten Glieder 17 sind untereinander zumindest im Wesentlichen baugleich ausgebildet, und die zweiten Glieder 19 sind ebenfalls untereinander zumindest im Wesentlichen baugleich ausgebildet.

Die abwechselnd aufeinanderfolgenden ersten und zweiten Glieder 17, 19 bilden eine serielle Anordnung 21, welche ihrerseits zumindest einen Teil der Kette 15 bildet. In den Figuren ist die Kette 15 jeweils nicht vollständig gezeigt, sondern es ist aufgrund des beschränkten Darstellungsplatzes jeweils nur ein Teil der Anordnung 21 gezeigt, der beispielsweise in Fig. 1 neun erste Glieder 17 und acht zweite Glieder 19 umfasst. Um eine hinreichende Länge zur Verwendung als Kettenschloss für Zweiräder aufzuweisen, weist die Kette 15 wesentlich mehr Glieder 17, 19 auf. Dazu setzt sich die serielle Anordnung 21 der abwechselnd aufeinanderfolgenden ersten und zweiten Glieder 17, 19 an dem Ende (links) des in Fig. 1 gezeigten Teils der Anordnung 21 bzw. an den beiden Enden (links und rechts) des in den Fig. 3 und 4 jeweils gezeigten Teils der Anordnung 21 in entsprechender Weise fort. Bei den Fig. 3 und 4 sind die beiden Enden des gezeigten Teils der Anordnung 21 eigentlich miteinander verbunden, so dass das Kettenschloss 11 einen geschlossenen Zustand einnimmt, in welchem es eine ringförmig geschlossene Struktur aufweist.

Durch das abwechselnde Aufeinanderfolgen erster Glieder 17 und zweiter Glieder 19 bilden jeweils ein erstes Glied 17 und ein zweites Glied 19 eine Einheit, die sich entlang der seriellen Anordnung 21 wiederholt. In Fig. 2 ist eine solche Einheit separat gezeigt. Wie zu erkennen ist, erstreckt sich jedes der Glieder 17, 19 von einem ersten Ende, an dem es mit dem jeweiligen ihm entlang der seriellen Anordnung 21 vorangehenden Glied 17 bzw. 19 der Anordnung 21 gekoppelt ist, zu einem dazu entgegengesetzten zweiten Ende, an dem es mit dem jeweiligen ihm entlang der seriellen Anordnung 21 nachfolgenden Glied 17 bzw. 19 der Anordnung 21 gekoppelt ist. Die Längserstreckung der Glieder 17, 19 von dem ersten Ende bis zu dem zweiten Ende beträgt beispielsweise etwa 5 cm.

Jedes der Glieder 17, 19 ist mit dem jeweiligen ihm entlang der seriellen Anordnung 21 vorangehenden Glied 17, 19 und dem jeweiligen ihm entlang der seriellen Anordnung 21 nachfolgenden Glied 17, 19 über eine jeweilige Gelenkverbindung 23 gekoppelt (mit Ausnahme der beiden Endglieder 33, 35 der Anordnung 21, die jeweils nur mit dem jeweiligen nachfolgenden Glied 17, 19 bzw. nur mit dem jeweiligen vorangehenden Glied 17, 19 gekoppelt sind) . Die Kopplung ist derart, dass die beiden über die jeweilige Gelenkverbindung 23 miteinander gekoppelten Glieder 17, 19 um eine Gelenkachse G der Gelenkverbindung 23 relativ zueinander schwenkbar sind, wobei die Gelenkachsen G aller Gelenkverbindungen 23 zumindest im Wesentlichen parallel zu derselben Normalrichtung N ausgerichtet sind.

Sowohl die ersten Glieder 17 als auch die zweiten Glieder 19 umfassen jeweils zwei Gliederplatten 25, die entlang der Normalrichtung N versetzt zueinander angeordnet sind und sich mit zumindest im Wesentlichen konstantem Abstand zueinander von dem ersten Ende zu dem zweiten Ende des jeweiligen Gliedes 17, 19 erstrecken. Der Abstand der Gliederplatten 25 eines jeweiligen ersten Gliedes 17 der seriellen Anordnung 21 ist dabei größer als der Abstand der Gliederplatten 25 eines jeweiligen zweiten Gliedes 19 der seriellen Anordnung 21. Insbesondere entspricht der Innenabstand der Gliederplatten 25 bei den ersten Gliedern 17 zumindest im Wesentlichen dem Außenabstand der Gliederplatten 25 bei den zweiten Gliedern 19, so dass zwei aufeinanderfolgende Glieder 17, 19 der Anordnung 21 zur Kopplung miteinander überlappen können. Dabei ist dann eines der Enden des jeweiligen zweiten Gliedes 19 im Bereich eines der Enden des jeweiligen ersten Gliedes 17 zwischen den Gliederplatten 25 dieses ersten Gliedes 17 angeordnet.

Die Gelenkverbindungen 23 werden jeweils durch einen Bolzen 27 gebildet, der die Gliederplatten 25 der beiden jeweiligen durch die jeweilige Gelenkverbindung 23 gekoppelten Glieder 17, 19 an deren jeweiligem Ende durchgreift. Zur Befestigung kann insbesondere vorgesehen sein, dass der Bolzen 27 an den beiden Enden seiner Längserstreckung jeweils eine Umfangsverbreiterung aufweist, so dass er mit den beiden äußersten Gliederplatten 25 (also mit den Gliederplatten 25 des an der jeweiligen Gelenkverbindung 23 beteiligten ersten Gliedes 17) eine Art Nietverbindung eingeht. Von den Bolzen 27 ist in den Figuren jeweils nur das in Richtung zum Betrachter ausgerichtete Ende des jeweiligen Bolzens 27 zu sehen (vgl. Fig. 2).

Damit das an der jeweiligen Gelenkverbindung 23 beteiligte zweite Glied 19 zuverlässig gelenkig an dem Bolzen 27 gelagert ist, kann die jeweilige Gelenkverbindung 23 zudem eine Hülse umfassen, die zwischen den beiden innersten Gliederplatten 25 (also zwischen den Gliederplatten 25 des an der jeweiligen Gelenkverbindung 23 beteiligten zweiten Gliedes 19) angeordnet ist und durch die hindurch sich der Bolzen 27 erstreckt. Die Hülse kann dabei lose oder mit den beiden innersten Gliederplatten 25 fest verbunden sein. Eine solche Hülse kann als Abstandshalter fungieren, um die beiden Gliederplatten 25 in einem definierten Abstand zueinander zu halten. In den Figuren sind derartige Hülsen nicht zu erkennen.

Der Schlosskörper 13 des Kettenschlosses 11 weist eine Form auf, die der Form der Glieder 17, 19, insbesondere der ersten Glieder 17, grundsätzlich ähnlich ist. Insbesondere erstreckt sich der Schlosskörper 13 von einem ersten Ende 29 zu einem dazu entgegengesetzten zweiten Ende 31 und ist an seinem ersten Ende 29 - auf ähnliche Weise wie die Glieder 17, 19 untereinander - über eine Gelenkverbindung 23' mit einem zweiten Glied 19 der seriellen Anordnung 21 gekoppelt, bei dem es sich um das erste Glied 17, 19 entlang der Abfolge von Gliedern 17, 19 der Anordnung 21 handelt und das daher ein erstes Endglied 33 der Anordnung 21 ist. Von diesem ersten Endglied 33 erstreckt sich die Anordnung 21 bis zu einem zweiten Endglied 35 (vgl. Fig. 3 und 4), bei dem es sich wiederum um ein zweites Glied 19 handelt.

Durch die Kopplung des ersten Endes 29 des Schlosskörpers 13 über die Gelenkverbindung 23' mit dem ersten Endglied 33 der Kette 15 ist der Schlosskörper 13 relativ zu dem ersten Endglied 33 um eine zu der Normalrichtung N parallele Gelenkachse G der Gelenkverbindung 23' schwenkbar. Dadurch sowie durch seine Form kann der Schlosskörper 13 als ein weiteres Glied der Kette 15 betrachtet werden.

An seinem dem ersten Ende 29 entgegengesetzten zweiten Ende 31 weist der Schlosskörper 13 einen Kopplungsabschnitt 37 mit einer U-Form auf, deren Öffnung in eine zur Normalrichtung N sowie zur Längserstreckung des Schlosskörpers 13 (von seinem ersten Ende 21 zu seinem zweiten Ende 31) senkrechte Richtung weisend ausgerichtet ist. Dadurch weist der Kopplungsabschnitt 37 eine Hakenform auf. Ein Bereich am Boden der U-Form bzw. Hakenform bildet eine Verriegelungsaufnahme 39 (vgl. Fig. 1).

Der Kopplungsabschnitt 37 mit der Verriegelungsaufnahme 39 ist bezüglich seiner Ausdehnung entlang der Normalrichtung N derart schmal ausgebildet, dass der Schlosskörper 13 mit dem Kopplungsabschnitt 37 zwischen die zwei innersten Gliederplatten 25 zweier über eine jeweilige Gelenkverbindung 23 miteinander gekoppelter Glieder 17, 19 eingreifen kann. Dadurch ist es möglich, dass eine der Gelenkverbindungen 23 der seriellen Anordnung 21 in der Verriegelungsaufnahme 39 aufgenommen werden kann. Die in der Verriegelungsaufnahme 39 aufgenommene Gelenkverbindung 23 wird dann in Umfangsrichtung um ihre Gelenkachse G von dem Kopplungsabschnitt über mehr als 270° umgriffen, so dass die Gelenkverbindung 23 die Verriegelungsaufnahme 39 im Wesentlichen nur in die genannte zur Normalrichtung N sowie zur Längserstreckung des Schlosskörpers 13 senkrechte Richtung wieder verlassen kann.

Grundsätzlich kann eine beliebige der Gelenkverbindungen 23, die jeweils ein erstes Glied 17 mit einem zweiten Glied 19 der Kette 15 koppeln, in der Verriegelungsaufnahme 39 aufgenommen werden (sofern sich die Gelenkverbindung 23 nicht so nah am ersten Endglied 33 befindet, dass sie die Verriegelungsaufnahme 39 nicht erreichen kann). Außerdem kann in die Verriegelungsaufnahme 39 in entsprechender Weise auch ein Abschnitt des zweiten Endglieds 35 aufgenommen werden, der an dessen zweitem, mit keinem nachfolgenden Glied 17,19 gekoppelten Ende ausgebildet ist und zu den Gelenkverbindungen 23 der Anordnung 21 strukturell im Wesentlichen identisch ist. Insbesondere sind die Gliederplatten 25 des zweiten Endglieds 35 an dessen zweitem Ende durch einen Bolzen 27 und/ oder eine Hülse fest miteinander verbunden, der/die (entsprechend wie eine der Gelenksverbindung 23) in der Verriegelungsaufnahme 39 aufgenommen werden kann. Dies wird in Fig. 3 veranschaulicht; die Fig. 4 zeigt dagegen beispielhaft, wie eine der Gelenkverbindungen 23 in der Verriegelungsaufnahme 39 aufgenommen ist. In beiden Fällen befindet sich das Kettenschloss 11 dadurch, dass der Abschnitt des zweiten Endglieds 35 bzw. eine der Gelenkverbindungen 23 in der Verriegelungsaufnahme 39 aufgenommen ist, in einem geschlossenen Zustand.

Der Schlosskörper weist ferner einen Verriegelungsmechanismus 41 auf, durch den die jeweilige in die Verriegelungsaufnahme 39 aufgenommene Gelenkverbindung 23 (bzw. der in die Verriegelungsaufnahme 39 aufgenommene Abschnitt des zweiten Endglieds 35) gegen ein Verlassen der Verriegelungsaufnahme 39 gesichert werden kann. Der Verriegelungsmechanismus 41 umfasst dazu ein Sicherungselement 43, das eine U-Form aufweist, deren Innenraum demjenigen der U-Form des Kopplungsabschnitts 37 hinsichtlich seiner Maße sehr ähnlich, insbesondere zumindest nahezu identisch, ist. Das Sicherungselement 43 ist zwischen einer Sicherungsstellung und einer Freigabestellung um eine zur Normalrichtung N parallele Drehachse drehbar an dem Schlosskörper 13 gelagert und derart angeordnet, dass ein Bereich am Boden der U-Form des Sicherungselements 43 zusammen mit dem genannten Bereich am Boden der U-Form des Kopplungsabschnitts 37 unabhängig von der Drehstellung des Sicherungselements 43 die Verriegelungsaufnahme 39 bildet.

Sofern eine der Gelenkverbindungen 23 in der Verriegelungsaufnahme 39 aufgenommen ist, fällt die Drehachse des Sicherungselements 43 mit der Gelenkachse G dieser Gelenkverbindung 23 zusammen. Zudem wird die Gelenkverbindung 23 dann von dem Sicherungselement 43 in Umfangsrichtung um ihre Gelenkachse G über mehr als 270° umgriffen, so dass die Gelenkverbindung 23 die Verriegelungsaufnahme 39 allenfalls durch den verbleibenden Winkelbereich, der die Öffnung der U-Form des Sicherungselements 43 bildet, verlassen kann.

In der Freigabestellung weisen die Öffnungen der U-Form des Kopplungsabschnitts 37 und der U-Form des Sicherungselements 43 in dieselbe Richtung, so dass die Verriegelungsaufnahme 39 in diese Richtung offen ist und eine gegebenenfalls darin aufgenommene Gelenkverbindung 23 die Verriegelungsaufnahme 39 also verlassen kann. Wird das Sicherungselement 41 aus dieser Freigabestellung verdreht, schließt sich die Öffnung der Verriegelungsaufnahme 39, bis der Kopplungsabschnitt 37 und das Sicherungselement 43 schließlich eine geschlossene Struktur bilden, die sich vollumfänglich um eine gegebenenfalls in der Verriegelungsaufnahme 39 aufgenommene Gelenkverbindung 23 herum erstreckt.

In der somit eingenommenen Sicherungsstellung des Sicherungselements 43, die sich von der Freigabestellung beispielsweise um zumindest 90° unterscheidet, ist die Gelenkverbindung 23 folglich durch das Sicherungselement 43 gegen ein Verlassen der Verriegelungsaufnahme 39 gesichert. Insofern befindet sich das Kettenschloss 11 dann in einem nicht nur geschlossenen, sondern auch verriegelten Zustand. In diesem verriegelten Zustand sind die Glieder 17, 19, die durch die in der Verriegelungsaufnahme 39 gesicherte Gelenkverbindung 23 miteinander gekoppelt werden, zwar von dem Schlosskörper 13 nicht lösbar, aufgrund der Art der Sicherung aber relativ zu dem Schlosskörper 13 noch schwenkbar. Entsprechendes gilt für das zweite Endglied 35, wenn es mit dem genannten Abschnitt in der Verriegelungsaufnahme 39 aufgenommen und durch das Sicherungselement 43 gegen ein Verlassen der Verriegelungsaufnahme 39 gesichert ist (vgl. Fig. 3).

Der Verriegelungsmechanismus 41 umfasst ferner eine Schließvorrichtung in Form eines Schließzylinders, der innerhalb des Schlosskörpers 13 angeordnet ist und daher in den Figuren nicht zu erkennen ist. Der Schließzylinder lässt sich (ausschließlich) mittels eines zugeordneten Schlüssels 45 betätigen und ist mit dem Sicherungselement 43 antriebswirksam gekoppelt, so dass mittels des Schlüssels 45 das Sicherungselement 43 zwischen seiner Sicherungsstellung und seiner Freigabestellung verstellt werden kann. Die antriebswirksame Kopplung erfolgt durch das Ineinandergreifen einer an dem Schließzylinder bzw. an einem von dem Schließzylinder angetriebenen Mitnehmer ausgebildeten Verzahnung und einer an dem Sicherungselement 43 ausgebildeten Außenverzahnung 47. Durch die Außenverzahnung 47 ist das Sicherungselement 43 zumindest über einen Teil seines Umfangs nach Art eines Zahnrades ausgebildet, was eine unmittelbare und zuverlässige Kraftübertragung zwischen dem Schließzylinder und dem Sicherungselement 43 erlaubt.

Wie insbesondere ein Vergleich der Fig. 3 und 4 zeigt, lassen sich bei dem erfindungsgemäßen Kettenschloss 11 vorteilhafterweise viele verschiedene effektive Längen einstellen, die das Kettenschloss 11 in geschlossenem Zustand aufweisen kann. Das ermöglicht es, das Kettenschloss 11 besonders flexibel an die jeweiligen räumlichen Gegebenheiten anzupassen, um es möglichst eng um das zu sichernde bewegliche Objekt (zum Beispiel ein Zweirad) sowie das Objekt, an dem es gesichert werden soll, zu schließen. Auf diese Weise kann eine verbesserte Aufbruchssicherheit bei zugleich komfortabler Handhabung erreicht werden.

### Bezugszeichen

- 11: Kettenschloss
- 13: Schlosskörper
- 15: Kette
- 17: erstes Glied
- 19: zweites Glied
- 21: serielle Anordnung
- 23, 23': Gelenkverbindung
- 25: Gliederplatte
- 27: Bolzen
- 29: erstes Ende
- 31: zweites Ende
- 33: erstes Endglied
- 35: zweites Endglied
- 37: Kopplungsabschnitt
- 39: Verriegelungsaufnahme
- 41: Verriegelungsmechanismus
- 43: Sicherungselement
- 45: Schlüssel
- 47: Außenverzahnung
- G: Gelenkachse
- N: Normalrichtung

## Patentansprüche

1. Kettenschloss (11), insbesondere für ein Zweirad, mit einem Schlosskörper (13) sowie einer Kette (15), die eine serielle Anordnung (21) aufeinanderfolgender Glieder (17, 19) umfasst, die untereinander über eine jeweilige Gelenkverbindung (23) miteinander gekoppelt und um eine zu einer Normalrichtung (N) parallele Gelenkachse (G) der jeweiligen Gelenkverbindung (23) relativ zueinander schwenkbar sind,
wobei der Schlosskörper (13) eine Verriegelungsaufnahme (39) aufweist, die dazu ausgebildet ist, eine der Gelenkverbindungen (23) aufzunehmen, und einen Verriegelungsmechanismus (41) umfasst, mittels dessen die in der Verriegelungsaufnahme (39) aufgenommene Gelenkverbindung (23) gegen ein Verlassen der Verriegelungsaufnahme (39) sicherbar ist,
wobei jedes der Glieder (17, 19) der Anordnung (15) zwei jeweilige Gliederplatten (25) umfasst, die entlang der Normalrichtung (N) versetzt zueinander angeordnet sind, wobei sich jede der zwei Gliederplatten (25) von einem ersten Ende des jeweiligen Gliedes (17, 19), an dem gegebenenfalls die Gelenkverbindung (23) zur Kopplung mit dem ihm vorangehenden Glied (17, 19) ausgebildet ist, zu einem dazu entgegengesetzten zweiten Ende des jeweiligen Gliedes (17, 19), an dem gegebenenfalls die Gelenkverbindung (23) zur Kopplung mit dem ihm nachfolgenden Glied (17, 19) ausgebildet ist, erstreckt,
**dadurch gekennzeichnet,**
**dass** der Schlosskörper (13) dazu ausgebildet ist, für das Aufnehmen einer der Gelenkverbindungen (23) in die Verriegelungsaufnahme (39) zwischen die zwei Gliederplatten (25) zumindest eines der beiden Glieder (17, 19), welche über die Gelenkverbindung (23) miteinander gekoppelt sind, einzugreifen.

2. Kettenschloss nach Anspruch 1,
wobei sich der Schlosskörper (13) von einem ersten Ende (29) zu einem zweiten Ende (31) erstreckt,
wobei der Schlosskörper (13) an dem ersten Ende (29) über eine Gelenkverbindung (23') mit einem der Glieder (17, 19) der genannten Anordnung (15) gekoppelt und um eine zu der Normalrichtung (N) parallele Gelenkachse (G) dieser Gelenkverbindung (23') relativ zu diesem Glied (17, 19) schwenkbar ist,
und wobei an dem zweiten Ende (31) die Verriegelungsaufnahme (39) ausgebildet ist.

3. Kettenschloss nach Anspruch 1 oder 2,
wobei die Verriegelungsaufnahme (39) dazu ausgebildet ist, dass die Glieder (17, 19), die von der in der Verriegelungsaufnahme (39) aufgenommenen und gesicherten Gelenkverbindung (23) miteinander gekoppelt werden, relativ zu dem Schlosskörper (13) um die Gelenkachse (G) der Gelenkverbindung (23) schwenkbar sind.

4. Kettenschloss nach einem der vorstehenden Ansprüche,
wobei der Schlosskörper (13) einen, insbesondere hakenförmigen, Kopplungsabschnitt (37) aufweist, an dem die Verriegelungsaufnahme (39) ausgebildet ist und der die in der Verriegelungsaufnahme (39) aufgenommene Gelenkverbindung (23) in Umfangsrichtung um deren Gelenkachse (G) über mindestens 180° umgreift.

5. Kettenschloss nach einem der vorstehenden Ansprüche,
wobei der Verriegelungsmechanismus (41) ein Sicherungselement (43) umfasst, das zwischen einer Sicherungsstellung, in der es die in der Verriegelungsaufnahme (39) aufgenommene Gelenkverbindung (23) gegen ein Verlassen der Verriegelungsaufnahme (39) sperrt, und einer Freigabestellung, in der es die in der Verriegelungsaufnahme (39) aufgenommene Gelenkverbindung (23) für ein Verlassen der Verriegelungsaufnahme (39) freigibt, beweglich an dem Schlosskörper (13) gelagert ist.

6. Kettenschloss nach Anspruch 5,
wobei das Sicherungselement (43) zwischen der Sicherungsstellung und der Freigabestellung um die Gelenkachse (G) der in der Verriegelungsaufnahme (39) aufgenommenen Gelenkverbindung (23) drehbar an dem Schlosskörper (13) gelagert ist.

7. Kettenschloss nach Anspruch 6,
wobei das Sicherungselement (43) eine Außenverzahnung (47) aufweist, über die es von einer Schließvorrichtung des Schlosskörpers (13) zu einer Drehung zwischen der Sicherungsstellung und der Freigabestellung antreibbar ist.

8. Kettenschloss nach einem der Ansprüche 5 bis 7,
wobei das Sicherungselement (43) die in der Verriegelungsaufnahme (39) aufgenommene Gelenkverbindung (23) in Umfangsrichtung um deren Gelenkachse (G) über mindestens180° umgreift.

9. Kettenschloss nach einem der Ansprüche 5 bis 8,
wobei das Sicherungselement (43) in seiner Sicherungsstellung zusammen mit dem Schlosskörper (13) die in der Verriegelungsaufnahme (39) aufgenommene Gelenkverbindung (23) im Umfangsrichtung um deren Gelenkachse (G) vollumfänglich umgreift.

## Claims

1. A chain lock (11), in particular for a two-wheeler, comprising a lock body (13) and a chain (15) which comprises a serial arrangement (21) of consecutive links (17, 19) that are coupled to one another via a respective articulated joint (23) between one another and that can be pivoted relative to one another about a joint axis (G), which is in parallel with a normal direction (N), of the respective articulated joint (23),
wherein the lock body (13) has a locking receiver (39), which is configured to receive one of the articulated joints (23), and a locking mechanism (41) by means of which the articulated joint (23) received in the locking receiver (39) can be secured against a departure from the locking receiver (61),
wherein each of the links (17, 19) of the arrangement (15) comprises two respective link plates (25) which are arranged offset from one another along the normal direction (N), wherein each of the two link plates (25) extends from a first end of the respective link (17, 19), at which the articulated joint (23) is possibly configured for coupling to the link (17, 19) preceding the respective link (17, 19), to a second end of the respective link (17, 19) which is opposite to said first end and at which the articulated joint (23) is possibly configured for coupling to the link (17, 19) following the respective link (17, 19),
**characterized in that**
the lock body (13) is configured, for receiving one of the articulated joints (23) in the locking receiver (39), to engage between the two link plates (25) of at least one of the two links (17, 19) which are coupled to one another via the articulated joint (23).

2. A chain lock according to claim 1,
wherein the lock body (13) extends from a first end (29) to a second end (31),
wherein the lock body (13) is coupled at the first end (29) via an articulated joint (23') to one of the links (17, 19) of said arrangement (15) and is pivotable relative to this link (17, 19) about a joint axis (G), which is in parallel with the normal direction (N), of this articulated joint (23'), and wherein the locking receiver (39) is formed at the second end (31).

3. A chain lock according to claim 1 or 2,
wherein the locking receiver (39) is configured such that the links (17, 19), which are coupled to one another by the articulated joint (23) received and secured in the locking receiver (39), are pivotable relative to the lock body (13) about the joint axis (G) of the articulated joint (23).

4. A chain lock according to any one of the preceding claims,
wherein the lock body (13) has a coupling section (37), in particular a hook-shaped coupling section (37), at which the locking receiver (39) is formed and which engages over at least 180° around the articulated joint (23) received in the locking receiver (39) in the peripheral direction about the joint axis (G) of said articulated joint (23).

5. A chain lock according to any one of the preceding claims,
wherein the locking mechanism (41) comprises a securing element (43) which is movably supported at the lock body (13) between a securing position, in which said securing element (43) blocks the articulated joint (23) received in the locking receiver (39) against a departure from the locking receiver (39), and a release position, in which said securing element (43) releases the articulated joint (23) received in the locking receiver (39) for a departure from the locking receiver (39).

6. A chain lock according to claim 5,
wherein the securing element (43) is rotatably supported at the lock body (13) about the joint axis (G) of the articulated joint (23) received in the locking receiver (39) between the securing position and the release position.

7. A chain lock according to claim 6,
wherein the securing element (43) has an outer toothed arrangement (47) via which it can be driven by a locking device of the lock body (13) to rotate between the securing position and the release position.

8. A chain lock according to any one of the claims 5 to 7,
wherein the securing element (43) engages over at least 180° around the articulated joint (23) received in the locking receiver (39) in the peripheral direction about the joint axis (G) of said articulated joint (23).

9. A chain lock according to any one of the claims 5 to 8,
wherein, in its securing position, the securing element (43), together with the lock body (13), completely engages around the articulated joint (23) received in the locking receiver (39) in the peripheral direction about the joint axis (G) of said articulated joint (23).

## Revendications

1. Antivol à chaîne (11), en particulier pour un deux-roues, comprenant un corps d'antivol (13) ainsi qu'une chaîne (15) qui comprend un agencement en série (21) de maillons successifs (17, 19) qui sont couplés entre eux par une liaison articulée respective (23) et qui peuvent pivoter les uns par rapport aux autres autour d'un axe d'articulation (G), parallèle à une direction normale (N), de la liaison articulée respective (23),
dans lequel
le corps d'antivol (13) présente un logement de verrouillage (39), conçu pour recevoir l'une des liaisons articulées (23), et comprend un mécanisme de verrouillage (41) permettant de bloquer la liaison articulée (23) reçue dans le logement de verrouillage (39) pour l'empêcher de quitter le logement de verrouillage (39),
chacun des maillons (17, 19) dudit agencement (15) comprend deux plaques de maillon respectives (25) décalées l'une par rapport à l'autre selon la direction normale (N), chacune des deux plaques de maillon (25) s'étendant depuis une première extrémité du maillon respectif (17, 19), au niveau de laquelle, le cas échéant, la liaison articulée (23) est formée pour l'accouplement avec le maillon (17, 19) qui le précède, à une deuxième extrémité, opposée à la première, du maillon respectif (17, 19), au niveau de laquelle, le cas échéant, la liaison articulée (23) est formée pour l'accouplement avec le maillon (17, 19) qui le suit,
**caractérisé en ce que**
pour recevoir l'une des liaisons articulées (23) dans le logement de verrouillage (38), le corps d'antivol (13) est conçu pour s'engager entre les deux plaques de maillon (25) de l'un au moins des deux maillons (17, 19) qui sont accouplés l'un à l'autre par la liaison articulée (23).

2. Antivol à chaîne selon la revendication 1,
dans lequel le corps d'antivol (13) s'étend d'une première extrémité (29) à une deuxième extrémité (31),
à la première extrémité (29), le corps d'antivol (13) est accouplé à l'un des maillons (17, 19) dudit agencement (15) par une liaison articulée (23') et peut pivoter par rapport à ce maillon (17, 19) autour d'un axe d'articulation (G), parallèle à la direction normale (N), de cette liaison articulée (23'), et le logement de verrouillage (39) est formé à la deuxième extrémité (31).

3. Antivol à chaîne selon la revendication 1 ou 2,
dans lequel le logement de verrouillage (39) est conçu de manière à permettre aux maillons (17, 19), accouplés entre eux par la liaison articulée (23) logée et bloquée dans le logement de verrouillage (39), de pivoter par rapport au corps d'antivol (13) autour de l'axe d'articulation (G) de la liaison articulée (23).

4. Antivol à chaîne selon l'une des revendications précédentes,
dans lequel le corps d'antivol (13) comprend une portion d'accouplement (37), en particulier en forme de crochet, sur laquelle est formé le logement de verrouillage (39) et qui entoure la liaison articulée (23), logée dans le logement de verrouillage (39), sur au moins 180° dans la direction circonférentielle autour de son axe d'articulation (G).

5. Antivol à chaîne selon l'une des revendications précédentes,
dans lequel le mécanisme de verrouillage (41) comprend un élément de blocage (43) monté sur le corps d'antivol (13) de façon mobile entre une position de blocage, dans laquelle il bloque la liaison articulée (23) logée dans le logement de verrouillage (39) pour l'empêcher de quitter le logement de verrouillage (39), et une position de libération, dans laquelle il libère la liaison articulée (23) logée dans le logement de verrouillage (39) pour qu'elle puisse quitter le logement de verrouillage (39).

6. Antivol à chaîne selon la revendication 5,
dans lequel l'élément de blocage (43) est monté sur le corps d'antivol (13) de manière à pouvoir tourner autour de l'axe d'articulation (G) de la liaison articulée (23), logée dans le logement de verrouillage (39), entre la position de blocage et la position de libération.

7. Antivol à chaîne selon la revendication 6,
dans lequel l'élément de blocage (43) présente une denture extérieure (47) par laquelle il peut être entraîné en rotation entre la position de blocage et la position de libération par un dispositif de fermeture du corps d'antivol (13).

8. Antivol à chaîne selon l'une des revendications 5 à 7,
dans lequel l'élément de blocage (43) entoure la liaison articulée (23), logée dans le logement de verrouillage (39), sur au moins 180° dans la direction circonférentielle autour de son axe d'articulation (G).

9. Antivol à chaîne selon l'une des revendications 5 à 8,
dans lequel dans sa position de blocage, l'élément de blocage (43) entoure conjointement avec le corps d'antivol (13) entièrement la liaison articulée (23), logée dans le logement de verrouillage (39), dans la direction circonférentielle autour de son axe d'articulation (G).
